# FASCICULE DE BREVET EUROPEEN

(11) **EP 0 909 889 B1**
(45) Date de publication et mention de la délivrance du brevet: **25.06.2003**
(21) Numéro de dépôt: 98203413.4
(22) Date de dépôt: 13.10.1998
(51) Int. Cl.: F02F 1/42, F02B 23/10

(54) **Moteur à combustion interne à allumage commandé et à injection directe**
Fremdgezündete Brennkraftmaschine mit Direktenspritzung
Spark ignition internal combustion engine with direct injection

(30) Priorité: 14.10.1997 FR 9712839
(43) Date de publication de la demande: 21.04.1999
(73) Titulaire: Renault s.a.s., 92100 Boulogne Billancourt (FR)
(72) Inventeur: Marechal, Olivier, 93100 Montreuil (FR)

(56) Documents cités:
- EP-A- 0 209 426
- EP-A- 0 496 029
- GB-A- 1 194 655
- GB-A- 2 166 490
- US-A- 4 958 604

## Description

L'invention concerne un moteur à combustion interne à allumage commandé et à injection directe.

Les moteurs à combustion interne et à allumage commandé ont grand avantage à être mis en oeuvre avec un dispositif d'injection directe du carburant dans le cylindre.

En effet, l'utilisation de l'injection directe permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

L'utilisation d'un mélange "pauvre" est toutefois à la source d'un certain nombre de problèmes. Notamment, l'allumage de la combustion de mélange air/carburant est rendu plus difficile du fait de la faible proportion de carburant par rapport à l'air.

Dans le but de contourner ce problème, on cherche donc à faire fonctionner les moteurs à allumage commandé, lorsqu'ils sont alimentés en mélanges "pauvres", selon le principe des charges stratifiées dans lesquelles le mélange carburé n'a pas une composition homogène dans toute la chambre de combustion. On cherche ainsi à provoquer une plus grande concentration du carburant à proximité de la bougie d'allumage de telle sorte que l'étincelle que celle-ci produit puisse provoquer facilement le démarrage de la combustion.

L'injection directe permet notamment de réaliser de telles charges stratifiées.

Cependant, pour aboutir à un fonctionnement optimal du moteur, il est nécessaire de considérer l'ensemble des paramètres qui régissent l'aérodynamique interne du cylindre, c'est-à-dire l'écoulement des différents fluides dans le cylindre au cours d'un cycle moteur, en tenant notamment compte de la forme de la culasse, des ouvertures et fermetures des soupapes d'admission et d'échappement, de la position et de l'orientation de l'injecteur et des mouvements alternatifs du piston.

Le brevet américain US 4958604 enseigne une architecture classique de chambre de combustion de moteur à injection direct, à savoir ; une culasse dite en toit présentant deux pans inclinés, deux conduits d'admission débouchent dans un même pan, au moins un conduit d'échappement débouchant dans l'autre pan, un injecteur latéral et une bougie centrale. Un tel dispositif n'est toutefois pas satisfaisant pour obtenir un fonctionnement optimal d'un moteur à injection directe fonctionnant avec des charges pauvres stratifiées.

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur du type décrit précédemment, caractérisé en ce qu'il comporte :
- un cylindre dont une chambre de combustion est délimitée par une paroi supérieure en forme de toit qui comporte deux pans inclinés de chaque côté d'une arête ;
- une bougie d'allumage qui débouche sensiblement selon l'axe du cylindre dans la paroi supérieure de la chambre de combustion ;
- deux conduits d'admission qui débouchent chacun dans un des pans de la paroi supérieure de la chambre, dans des positions qui sont sensiblement symétriques par rapport à l'arête du toit ;
- un conduit d'échappement qui débouche dans un premier des pans de la paroi supérieure de la chambre ; et
- un injecteur de carburant qui débouche dans le second pan de la paroi supérieure.

Selon d'autres caractéristiques de l'invention :
- le moteur comporte un piston qui est muni dans une face supérieure d'un évidement concave qui est excentré radialement par rapport à l'axe du cylindre ;
- l'injecteur est orienté de manière qu'un axe principal d'injection du carburant soit dirigé sensiblement selon une direction tangente à une paroi latérale de l'évidement concave du piston ;
- l'évidement concave est agencé de telle manière que la bougie et l'injecteur débouchent en regard de l'évidement concave, sensiblement à l'opposé l'un de l'autre selon un diamètre de l'évidement ;
- un premier des conduits d'admission, qui débouche dans le premier pan de la paroi supérieure de la chambre, s'étend sensiblement au-dessus du second conduit d'admission ;
- le moteur comporte au moins deux cylindres parallèles qui sont disposés côte à côte selon une direction sensiblement parallèle à la direction de l'arête du toit, et un premier des conduits d'admission de l'un des cylindres, qui débouche dans le premier pan de la paroi supérieure dudit cylindre, s'étend sensiblement au-dessus de l'autre des cylindres ;
- le premier conduit d'admission est d'une longueur supérieure au second conduit.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale selon la ligne 1-1 de la figure 2 illustrant un cylindre d'un moteur conforme aux enseignements de l'invention ; et
- les figures 2 et 3 sont des vues schématiques et partielles de dessus, selon l'axe d'un cylindre, illustrant deux modes de réalisation de l'implantation de différents organes d'un moteur conforme aux enseignements de l'invention.

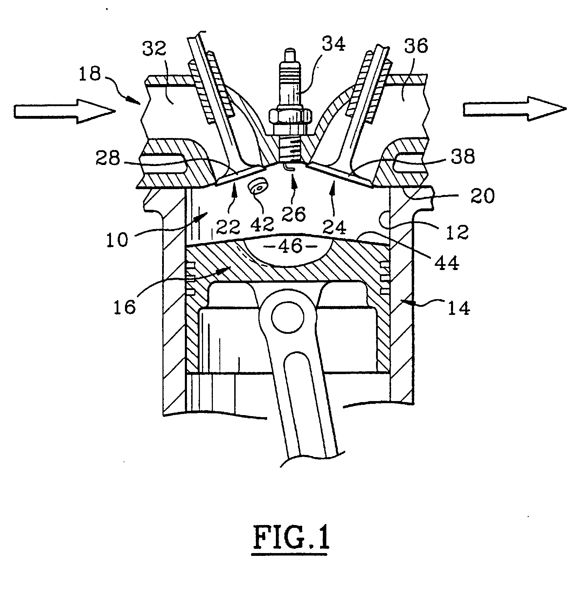

On a représenté sur la figure 1 un cylindre 10 d'un moteur à combustion interne à allumage commandé et à injection directe, notamment pour l'entraînement d'un véhicule automobile.

Le cylindre 10 est réalisé sous la forme d'un alésage 12 cylindrique d'axe A1 aménagé dans un bloc-moteur 14. Un piston 16 est animé d'un mouvement alternatif axial dans l'alésage 12 et il délimite, vers le bas, le volume du cylindre. De manière connue, le bloc-moteur 14 est recouvert d'une culasse 18 dont une face inférieure 20 délimite vers le haut le cylindre 10. En l'occurrence, au-dessus du cylindre 10, la face inférieure 20 est conformée en un toit présentant deux pans 22, 24 sensiblement plans et inclinés l'un par rapport à l'autre autour d'une arête sommitale 26.

Lorsque le piston 16 est au point mort haut, le volume du cylindre 10 délimité entre le piston 16 et la culasse 18 est appelé chambre de combustion.

Le cylindre 10 du moteur selon l'invention comporte deux soupapes d'admission 28 qui obturent chacune l'extrémité débouchante d'un conduit d'admission d'air 30, 32.

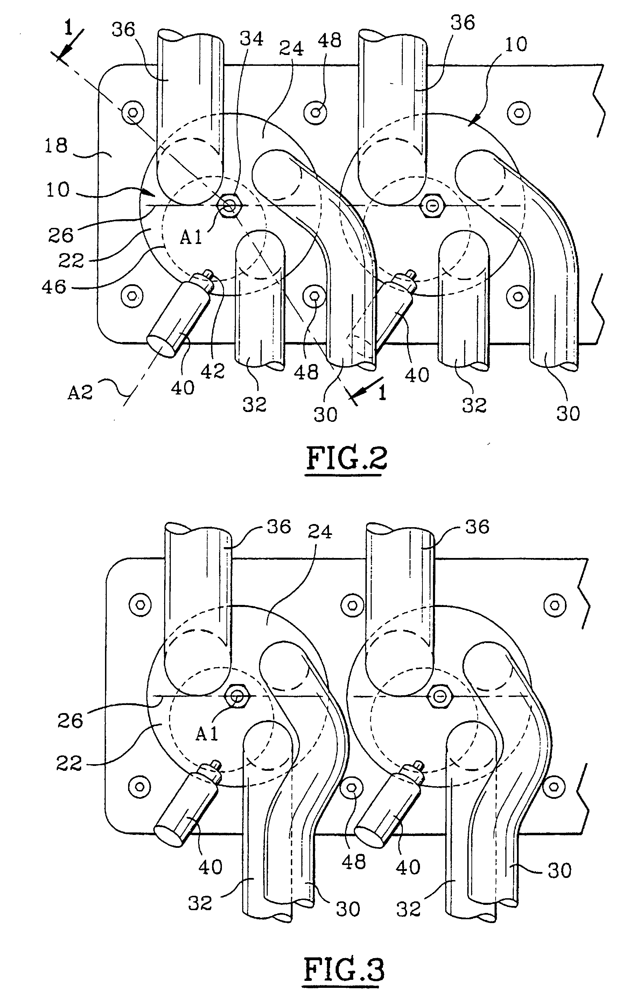

Selon un premier aspect de l'invention, les deux conduits 30 et 32 débouchent chacun dans l'un des pans 22, 24 du toit de la face inférieure 20 de la culasse 18. Ainsi, comme on peut le voir plus particulièrement sur les figures 2 et 3, les soupapes d'admission 28 sont agencées sensiblement symétriquement par rapport à l'arête 26.

Le cylindre 10 comporte aussi une bougie d'allumage à étincelles 34 qui est agencée sensiblement selon l'axe A1 du cylindre et dont les électrodes, qui débouchent dans la chambre de combustion, sont proches de l'arête sommitale 26.

Par ailleurs, la culasse 18 comporte aussi un conduit d'échappement 36 des gaz brûlés qui débouche dans le cylindre 10 dans l'un 24 des pans du toit de la face inférieure 20. L'extrémité débouchante du conduit d'échappement 36 est destinée à être obturée par une soupape d'échappement 38 dont le diamètre est par exemple supérieur au diamètre des deux soupapes d'admission 28.

S'agissant d'un moteur à injection directe, le cylindre 10 comporte donc un injecteur de carburant 40 dont le nez 42 débouche directement dans le cylindre, en l'occurrence dans le pan 22 du toit de la face inférieure 20 de la culasse 18 dans lequel ne débouche pas le conduit d'échappement 36. C'est en effet dans ce pan 22 que subsiste la place nécessaire au débouché de l'injecteur, l'autre pan 24 étant déjà encombré de la soupape d'échappement 38 et d'une soupape d'admission 28.

Cette disposition permet notamment de ménager dans la culasse 18, autour du nez 42 de l'injecteur 40, une bonne circulation de liquide de refroidissement, ce qui est favorable à son bon fonctionnement et à sa durée de vie.

Comme on peut le voir sur les figures, le piston 16 comporte, dans une face supérieure 44, un évidement concave 46 également appelé bol qui, en vue de dessus, présente une forme sensiblement circulaire. L'évidement concave 46 est excentré par rapport à l'axe A1 du cylindre. En effet, l'injecteur 40 et le bloc 46 sont agencés de telle sorte que l'axe d'injection de carburant de l'injecteur 40 arrive de manière à peu près tangentielle à la surface latérale de l'évidement 46, vers l'intérieur de celui-ci, et de telle manière que l'injecteur 40 soit sensiblement à l'opposé de la bougie 34 selon un diamètre de l'évidement concave 46.

En l'espèce, l'axe A2 de projection du carburant de l'injecteur 40 est incliné d'environ 40° vers le haut par rapport à un plan perpendiculaire à l'axe A1 du cylindre 10, et il est orienté de manière à former, dans un plan parallèle à celui de la culasse 18, un angle d'environ 20 à 45° par rapport à un plan axial perpendiculaire à l'arrête sommitale 26.

Comme on peut le voir sur les figures 2 et 3, il est prévu deux configurations possibles pour les conduits d'admission 30, 32.

Sur ces figures, on a illustré deux cylindres 10 qui sont alignés parallèlement l'un à l'autre selon une direction longitudinale.

Comme on peut le voir sur les figures, l'arête sommitale 26 est parallèle à la direction longitudinale. De plus, on peut voir que les deux conduits d'admission 30, 32 de chaque cylindre 10 s'étendent chacun en direction de l'un des côtés longitudinaux de l'alignement de cylindres 10 tandis que les conduits d'échappement 36 de ces cylindres 10 s'étendent en direction de l'autre côté de l'alignement de cylindres 10.

Dans l'exemple de réalisation de la figure 2, on peut voir que, pour chaque cylindre 10, un premier 30 des deux conduits d'admission, celui qui débouche dans le pan 24 dans lequel débouche le conduit d'échappement 36, s'étend en partie au-dessus du cylindre 10 voisin et plus particulièrement au-dessus de l'injecteur 40 du cylindre 10 voisin. Pour ce faire, le premier conduit d'admission 30 contourne une vis de fixation 48 de la culasse qui s'étend sensiblement parallèlement à l'axe A1.

Dans le deuxième mode de réalisation de l'invention, le conduit d'admission 30 est au contraire disposé de manière à s'étendre au moins en partie au-dessus du second conduit d'admission 32, donc en restant sensiblement au-dessus de l'emprise du même cylindre 10 dans la culasse 18.

Dans les deux cas, le conduit d'admission 30 qui débouche dans le même pan 24 que le conduit d'échappement 36 est de préférence d'une longueur supérieure à l'autre conduit d'admission 32.

La disposition des différents éléments du moteur selon l'invention permet notamment de créer, au moment de l'admission d'air, un mouvement tourbillonnant à l'intérieur du cylindre, appelé "swirl", sensiblement autour de l'axe A1. Ce mouvement est essentiellement dû au premier conduit d'admission 30, et il peut d'ailleurs être renforcé aux faibles charges en obturant au moins partiellement le second conduit d'admission 32.

Lors du temps de compression, c'est-à-dire lors de la remontée du piston 16 vers son point mort haut, le mouvement de "swirl" est canalisé dans l'évidement concave 46. Lorsque s'effectue l'injection de carburant, le jet de carburant est donc introduit dans l'évidement concave 46 sensiblement parallèlement à l'écoulement d'air dû au "swirl", dans le même sens que celui-ci, si bien que les gouttelettes de carburant tendent à être entraînées par le mouvement d'air en direction des électrodes de la bougie 34 de manière à former au voisinage de ces électrodes une zone particulièrement riche en carburant.

Ainsi, grâce à la disposition particulière des différents éléments dans le cylindre 10, le moteur selon l'invention est particulièrement apte à fonctionner avec des mélanges carburés pauvres injectés en charges stratifiées.

Cependant, ce même moteur peut aussi très bien fonctionner avec des charges homogènes, nécessaires par exemple pour obtenir la puissance maximale, notamment en avançant le moment de l'injection du carburant, par exemple au début du temps de compression ou lors de la phase d'admission.

## Revendications

1. Moteur à combustion interne, à allumage commandé et à injection directe,
comportant :
- un cylindre (10) dont une chambre de combustion est délimitée par une paroi supérieure (20) en forme de toit qui comporte deux pans (22, 24) inclinés de chaque côté d'une arête (26)
- une bougie d'allumage (34) qui débouche sensiblement selon l'axe (A1) du cylindre (10) dans la paroi supérieure (20) de la chambre de combustion ;
- un injecteur de carburant (40) qui débouche dans un second pan (22) de la paroi supérieure (20).
- un conduit d'échappement (36) qui débouche dans un premier (24) des pans de la paroi supérieure (20) de la chambre opposé à l'injecteur; et
- deux conduits d'admission (30, 32) , **caractérisé en ce que** les conduits d'admission débouchent chacun dans un des pans (22, 24) de la paroi supérieure (20) de la chambre, dans des positions qui sont sensiblement symétriques par rapport à l'arête (26) du toit ;

2. Moteur selon la revendication 1, **caractérisé en ce qu'**il comporte un piston (16) qui est muni dans une face supérieure (44) d'un évidement concave (46) qui est excentré radialement par rapport à l'axe du cylindre.

3. Moteur selon la revendication 2, **caractérisé en ce que** l'injecteur (40) est orienté de manière qu'un axe principal d'injection du carburant soit dirigé sensiblement selon une direction tangente à une paroi latérale de l'évidement concave (46) du piston (16).

4. Moteur selon la revendication 3, **caractérisé en ce que** l'évidement concave (46) est agencé de telle manière que la bougie (34) et l'injecteur (40) débouchent en regard de l'évidement concave (46), sensiblement à l'opposé l'un de l'autre selon un diamètre de l'évidement (46).

5. Moteur selon l'une quelconque des revendications précédentes, **caractérisé en ce qu'**un premier (30) des conduits d'admission, qui débouche dans le premier pan (24) de la paroi supérieure (20) de la chambre, s'étend sensiblement au-dessus du second conduit d'admission (32).

6. Moteur selon l'une quelconque des revendications 1 à 4, **caractérisé en ce que** le moteur comporte au moins deux cylindres (10) parallèles qui sont disposés côte à côte selon une direction sensiblement (A1) parallèle à la direction de l'arête (26) du toit, et **en ce qu'**un premier (30) des conduits d'admission de l'un des cylindres (10), qui débouche dans le premier pan (24) de la paroi supérieure (20) dudit cylindre (10), s'étend sensiblement au-dessus de l'autre des cylindres (10).

7. Moteur selon l'une des revendications 6 ou 7, **caractérisé en ce que** le premier conduit d'admission (30) est d'une longueur supérieure au second conduit (32).

## Patentansprüche

1. Verbrennungsmotor mit gesteuerter Zündung und
Direkteinspritzung, mit:
einem Zylinder (10), dessen Verbrennungskammer durch eine obere Wand (20) in Form eines Daches begrenzt ist, die zwei Dachflächen (22, 24) aufweist, die zu beiden Seiten einer Dachkante (26) geneigt zueinander angeordnet sind; einer Zündkerze (34), die im wesentlichen entlang der Achse (A1) des Zylinders (10) in die obere Wand (20) der Verbrennungskammer eingesetzt ist; einer Einspritzdüse (40) für den Kraftstoff, die in eine der Dachflächen (22) eingesetzt ist;
einer Auslassleitung (36), die in derjenigen Dachflächen (24) der oberen Wand (20) der Verbrennungskammer mündet, die der Einspritzdüse gegenüber liegt und zwei Einlassleitungen (30, 32), **dadurch gekennzeichnet, dass** die Einlassleitungen jeweils in einer der Dachflächen (22, 24) der oberen Wand (20) der Verbrennungskammer an Stellen münden, die im wesentlichen symmetrisch zur Dachkante (26) sind.

2. Motor nach Anspruch 1, **dadurch gekennzeichnet, dass** er einen Kolben (16) aufweist, dessen Oberseite (44) mit einer konkaven Aussparung (46) versehen ist, die in Radialrichtung exzentrisch zur Achse des Zylinders angeordnet ist.

3. Motor nach Anspruch 2, **dadurch gekennzeichnet, dass** die Einspritzdüse (40) derart ausgerichtet ist, dass die Hauptachse des eingespritzten Kraftstoffstrahls im wesentlichen in tangentialer Richtung zu einer Seitenwand der konkaven Aussparung (46) im Kolben (16) in diese eintritt.

4. Motor nach Anspruch 3, **dadurch gekennzeichnet, dass** die konkave Aussparung (46) derart angeordnet ist, dass die Zündkerze (34) und die Einspritzdüse (40) gegenüber der konkaven Aussparung (46) eingesetzt sind und sich auf einem Durchmesser der Aussparung (46) einander gegenüber liegend befinden.

5. Motor nach einem der vorhergehenden Ansprüche, **dadurch gekennzeichnet, dass** die erste Einlassleitung (30), die in der ersten Dachfläche (24) der oberen Wand (20) der Verbrennungskammer mündet, sich im wesentlichen oberhalb der zweiten Einlassleitung (32) erstreckt.

6. Motor nach einem der Ansprüche 1 bis 4, **dadurch gekennzeichnet, dass** der Motor mindestens zwei parallel zueinander und nebeneinander entlang einer Richtung A1, die parallel zur Richtung der Dachkante (26) ist, angeordnete Zylinder (10) aufweist und dass die erste Einlassleitung (30) für einen der Zylinder (10), die in der ersten Dachfläche (24) der oberen Wand (20) des Zylinders (10) mündet, sich im wesentlichen oberhalb des anderen Zylinders (10) erstreckt.

7. Motor nach einem der Ansprüche 6 oder 7. **dadurch gekennzeichnet, dass** die erste Einlassleitung (30) eine größere Länge besitzt als die zweite Einlassleitung (32).

## Claims

1. A controlled-ignition, direct-injection intemal combustion engine comprising:
- a cylinder (10), a combustion chamber of which is bounded by an upper wall (20) in the form of a roof which comprises two panels (22, 24) inclined on either side of a ridge (26);
- a spark plug (34) which communicates substantially along the axis (A1) of the cylinder (10) with the upper wall (20) of the combustion chamber;
- a fuel injector (40) which communicates with a second panel (22) of the upper wall (20);
- an exhaust duct (36) which communicates with a first (24) of the panels of the upper wall (20) of the chamber opposite the injector;
- two intake ducts (30, 32), **characterised in that** the intake ducts each communicate with one of the panels (22, 24) of the upper wall (20) of the chamber, in positions which are substantially symmetrical with respect to the ridge (26) of the roof.

2. An engine as claimed in claim 1, **characterised in that** it comprises a piston (16), an upper surface (44) of which is provided with a concave recess (46) which is radially off-centre with respect to the axis of the cylinder.

3. An engine as claimed in claim 2, **characterised in that** the injector (40) is oriented such that a main axis of injection of the fuel is directed substantially in a direction tangential to a lateral wall of the concave recess (46) of the piston (16).

4. An engine as claimed in claim 3, **characterised in that** the concave recess (46) is arranged such that the spark plug (34) and the injector (40) communicate facing the concave recess (46) substantially opposite one another along a diameter of the recess (46).

5. An engine as claimed in any one of the preceding claims, **characterised in that** a first (30) of the intake ducts, which communicates with the first panel (24) of the upper wall (20) of the chamber, extends substantially above the second intake duct (32).

6. An engine as claimed in any one of claims 1 to 4, **characterised in that** the engine comprises at least two parallel cylinders (10) which are disposed side by side in a direction (A1) substantially parallel to the direction of the ridge (26) of the roof, and **in that** a first (30) of the intake ducts of one of the cylinders (10), which communicates with the first panel (24) of the upper wall (20) of the cylinder (10), extends substantially above the other of the cylinders (10).

7. An engine as claimed in one of claims 6 or 7, **characterised in that** the first intake duct (30) is longer than the second duct (32).
